# EUROPÄISCHE PATENTSCHRIFT

(11) **EP 2 855 557 B1**
(45) Veröffentlichungstag und Bekanntmachung des Hinweises auf die Patenterteilung: **12.07.2017**
(21) Anmeldenummer: 13725379.5
(22) Anmeldetag: 28.05.2013
(51) Int. Cl.: C08G 63/181, C08G 63/66, C08G 18/40, C08G 18/42

(54) **POLYESTEROLE ZUR HERSTELLUNG VON POLYURETHAN-HARTSCHAUMSTOFFEN**
POLYESTEROLS FOR MANUFACTURING POLYURETHANE SOLID FOAM SUBSTANCES
POLYSYRÈNE DESTINÉ À LA FABRICATION DE MOUSSES RIGIDES DE POLYURÉTHANE

(30) Priorität: 30.05.2012 EP 12169955
(43) Veröffentlichungstag der Anmeldung: 08.04.2015
(73) Patentinhaber: BASF SE, 67056 Ludwigshafen am Rhein (DE)
(72) Erfinder: JACOBMEIER, Olaf, 32312 Lübbecke (DE); KAMPF, Gunnar, 32351 Stemwede-Haldem (DE)
(74) Vertreter: BASF IP Association
(86) Internationale Anmeldenummer: PCT/EP2013/060947
(87) Internationale Veröffentlichungsnummer: WO 2013/178623

(56) Entgegenhaltungen:
- EP-A1- 2 492 297
- WO-A1-2012/072540
- WO-A2-2010/043624

## Beschreibung

Die Erfindung betrifft Polyesterole, ein Verfahren zur Herstellung von Polyurethan-Hartschaumstoffen unter Verwendung der Polyesterole, die Polyurethan-Hartschaumstoffe selbst sowie deren Verwendung zur Herstellung von Sandwichelementen mit starren oder flexiblen Deckschichten.

Die Herstellung von Polyurethan-Hartschaumstoffen durch Umsetzung von organischen oder modifizierten organischen Di- oder Polyisocyanaten mit höhermolekularen Verbindungen mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen, ist bekannt und wird in zahlreichen Patent- und Literaturveröffentlichungen beschrieben.

Nachfolgend werden die Begriffe "Polyesterpolyol", "Polyesterol", "Polyesteralkohol" und die Abkürzung "PESOL" gleichbedeutend verwendet.

Übliche Polyesterpolyole sind Polykondensate aus aromatischen und/oder aliphatischen Dicarbonsäuren und Alkandiolen und/oder -triolen bzw. Etherdiolen. Es ist auch möglich, Polyesterabfälle und hier insbesondere Polyethylenterephthalat (PET)- bzw. Polybutylenterephthalat (PBT)-Abfälle zu Polyesterpolyolen zu verarbeiten. Hierfür sind eine ganze Reihe von Verfahren bekannt und beschrieben. Grundlage einiger Verfahren ist die Umwandlung des Polyesters in einen Diester der Terephthalsäure, z.B. in Dimethylterephthalat. In DE-A 100 37 14 und US-A 5,051,528 werden derartige Umesterungen unter Einsatz von Methanol und Umesterungskatalysatoren beschrieben.

Ferner ist bekannt, dass Terephthalsäure-basierte Ester bezüglich des Brandverhaltens Phthalsäure-basierten Estern überlegen sind, wie zum Beispiel in WO 2010/043624 beschrieben.

Beim Einsatz der Polyesterpolyole, die auf aromatischen Carbonsäuren oder deren Derivaten basieren (wie Terephthalsäure oder Phthalsäureanhydrid), zur Herstellung von Polyurethan (PU)-Hartschaumstoffen macht sich oft die hohe Viskosität der Polyesterpolyole negativ bemerkbar, da somit die Viskosität der Abmischungen mit den Polyestern ansteigt und dadurch die Vermischung mit dem Isocyanat deutlich erschwert wird.

Aus der EP-A 1 058 701 sind aromatische Polyesterpolyole mit niedriger Viskosität bekannt, die durch Umesterung eines Gemisches aus Phtalsäurederivaten, Diolen, Polyolen und hydrophoben fettbasierten Materialien erhalten werden.

Zudem kann es in bestimmten Systemen zur Herstellung von PU-Hartschaumstoffen, zum Beispiel unter Verwendung von Glycerin als höherfunktionelle alkoholische Polyester-Komponente, zu Problemen mit einer unzureichenden Maßhaltigkeit kommen, d.h. das Schaumstoff-Produkt verformt sich nach der Entformung oder nach der Druckstrecke bei Verarbeitung nach dem Doppelbandverfahren deutlich.

Auch ist das Problem des Verhaltens von PU-Hartschaumstoffen im Brandfall bisher nicht für alle Systeme befriedigend gelöst. Beispielsweise kann sich beim Einsatz von Trimethylolpropan (TMP) als höherfunktionelle alkoholische Polyester-Komponente im Brandfall eine toxische Verbindung bilden.

Ein generelles Problem bei der Herstellung von Hartschaumstoffen ist die Ausbildung von Oberflächendefekten, vorzugsweise an der Grenzfläche zu metallischen Deckschichten. Diese Schaumoberflächendefekte bedingen die Ausbildung einer unebenen Metalloberfläche bei Sandwichelementen und führen somit oft zu einer optischen Beanstandung des Produkts. Eine Verbesserung der Schaumoberfläche vermindert die Häufigkeit des Auftretens solcher Oberflächendefekte und führt somit zu einer optischen Verbesserung der Oberfläche von Sandwichelementen.

Polyurethan-Hartschaumstoffe zeigen häufig eine hohe Sprödigkeit, was sich beim Zuschnitt der Schäume entweder durch eine starke Staubentwicklung und hohe Empfindlichkeit des Schaums zeigt, oder beim Sägen des Schaumstoffs, vor allem beim Sägen von Verbundelementen mit metallischen Deckschichten und einem Kern aus einem Polyisocyanuratschaum, zur Rissbildung im Schaum führen kann.

Ferner ist es allgemein wünschenswert, Systeme mit einer möglichst hohen Eigenreaktivität bereitzustellen, um den Einsatz von Katalysatoren zu minimieren.

Problematisch ist die Rauchgasbildung der Polyurethan- oder Polyisocyanurat-Hartschaumdämmstoffe im Brandfall.

Aufgabe der Erfindung ist es somit, Polyesterole für die Herstellung von Polyurethan- oder Polyisocyanurat-Hartschaumstoffen bereitzustellen, welche im Brandfall eine verminderte Rauchgasbildung der damit hergestellten Polyurethan- oder Polyisocyanurat-Hartschaumstoffe ergeben. Ferner ist es Aufgabe der Erfindung, Polyurethan- oder Polyisocyanurat-Hartschaumstoffe mit einer verringerten Rauchgasbildung im Brandfall bereitzustellen.

Gelöst wird die Aufgabe durch ein Polyesterol B), erhältlich durch Umsetzung von
b1) 10 bis 70 Mol-%, vorzugsweise 20 bis 60 Mol-%, besonders bevorzugt 25 bis 50 Mol-%, und insbesondere 30 bis 40 Mol-% mindestens einer Verbindung, ausgewählt aus der Gruppe bestehend aus Terephthalsäure, Dimethylterephthalat, Polyethylenterephthalat, Phthalsäureanhydrid, Phthalsäure und Isophthalsäure,
b2) 0,8 bis 3,2 Mol-%, vorzugsweise 1,1 bis 3,2 Mol-% und insbesondere 1,2 bis 2,5 Mol-% und speziell 1,3 bis 2,0 Mol-% eines Fettsäuretriglycerids,
b3) 10 bis 70 Mol-%, vorzugsweise 20 bis 60 Mol-%, besonders bevorzugt 30 bis 55 Mol-% und insbesondere 40 bis 50 Mol-% eines Diols, ausgewählt aus der Gruppe bestehend aus Ethylenglykol, Diethylenglykol und Polyethylenglykol,
b4) 5 bis 50 Mol-%, vorzugsweise 10 bis 40 Mol-%, besonders bevorzugt 12 bis 30 Mol-% und insbesondere 14 bis 25 Mol-% eines Polyetherpolyols mit einer Funktionalität größer 2,
   wobei pro kg des Polyesterols B) mindestens 200 mmol der Komponente b4) eingesetzt werden,
wobei die Summe der Komponenten b1) bis b4) 100 Mol-% ergibt.

Ferner wird die Aufgabe gelöst durch ein Verfahren zur Herstellung von Polyurethan-Hartschaumstoffen umfassend die Umsetzung von
A) mindestens einem Polyisocyanat,
B) mindestens einem Polyesterol, erhältlich durch Umsetzung von
   b1) 10 bis 70 Mol-%, vorzugsweise 20 bis 60 Mol-%, besonders bevorzugt 25 bis 50 Mol-%, und insbesondere 30 bis 40 Mol-% mindestens einer Verbindung, ausgewählt aus der Gruppe bestehend aus Terephthalsäure, Dimethylterephthalat, Polyethylenterephthalat, Phthalsäureanhydrid, Phthalsäure und Isophthalsäure,
   b2) 0,8 bis 3,2 Mol-%, vorzugsweise 1,1 bis 3,2 Mol-% und insbesondere 1,2 bis 2,5 Mol-% und speziell 1,3 bis2,0 Mol-% eines Fettsäuretriglycerids,
   b3) 10 bis 70 Mol-%, vorzugsweise 20 bis 60 Mol-%, besonders bevorzugt 30 bis 55 Mol-% und insbesondere 40 bis 50 Mol-% eines Diols, ausgewählt aus der Gruppe bestehend aus Ethylenglykol, Diethylenglykol und Polyethylenglykol,
   b4) 5 bis 50 Mol-%, vorzugsweise 10 bis 40 Mol-%, besonders bevorzugt 12 bis 30 Mol-% und insbesondere 14 bis 25 Mol-% eines Polyetherpolyols mit einer Funktionalität größer 2,
   wobei pro kg des Polyesterols B) mindestens 200 mmol der Komponente b4) eingesetzt werden,
   wobei die Summe der Komponenten b1) bis b4) 100 Mol-% ergibt,
C) optional einem oder mehreren weiteren Polyesterpolyolen, die sich von denen der Komponente B) unterscheiden,
D) optional einem oder mehreren Polyetherpolyolen,
E) optional einem oder mehreren Flammschutzmitteln,
F) einem oder mehreren Treibmitteln,
G) einem oder mehreren Katalysatoren, und
H) optional weiteren Hilfsmitteln oder Zusatzstoffen.

Gegenstand der vorliegenden Erfindung ist außerdem eine Polyolkomponente enthaltend die vorgenannten Komponenten B) bis H), wobei das Massenverhältnis der Summe der Komponenten B) und gegebenenfalls C) zu Komponente D) mindestens 1 beträgt.

Weitere Gegenstände der vorliegenden Erfindung sind Polyurethan-Hartschaumstoffe, erhältlich nach dem erfindungsgemäßen Verfahren, sowie deren Verwendung zur Herstellung von Sandwich-Elementen mit starren oder flexiblen Deckschichten. Unter Polyurethan-Hartschaumstoffen im Sinne der Erfindung werden auch Polyisocyanurat-Hartschaumstoffe verstanden, die spezielle Polyurethan-Hartschaumstoffe darstellen.

Die nachfolgend im Rahmen von Komponente B) bis H) aufgeführten Ausführungsformen beziehen sich sowohl auf das erfindungsgemäße Verfahren und die so erhältlichen Hartschaumstoffe als auch auf die erfindungsgemäße Polyolkomponente.

### Komponente B

Nachstehend werden die Begriffe "Polyesterpolyol" und "Polyesterol" gleichbedeutend verwendet, ebenso die Begriffe "Polyetherpolyol" und "Polyetherol".

Vorzugsweise enthält die Komponente b1) mindestens eine Verbindung aus der Gruppe bestehend aus Terephthalsäure (TPA), Dimethylterephthalat (DMT), Polyethylenterephthalat (PET), Phthalsäureanhydrid (PSA) und Phthalsäure, besonders bevorzugt bestehend aus Terephthalsäure (TPA), Dimethylterephthalat (DMT) und Polyethylenterephthalat (PET). Insbesondere bevorzugt enthält die Komponente b1) mindestens eine Verbindung aus der Gruppe bestehend aus Terephthalsäure und Dimethylterephthalat (DMT). Im speziellen besteht die Komponente b1) aus Terephthalsäure. Terephthalsäure und/oder DMT in Komponente b1) führen zu Polyestern B) mit besonders guten Brandschutzeigenschaften.

Vorzugsweise wird die Komponente b2) in Mengen von 1,1 bis 3,2 Mol-%, spezifischer 1,2 bis 2,5 Mol-%, noch spezieller 1,3 bis 2,0 Mol % eingesetzt. Vorzugsweise handelt es sich beim Fettsäuretriglycerid um Sojaöl, Rapsöl, Talg oder deren Gemische. In einer speziellen Ausführungsform handelt es sich um Sojaöl. In einer weiteren speziellen Ausführungsform handelt es sich um Rindertalg. Das Fettsäuretriglycerid verbessert unter anderem die Treibmittellöslichkeit bei der Herstellung von Polyurethan-Hartschaumstoffen, wobei sich eine geringere Menge des Fettsäuretriglycerids b2) in dem Polyesterol B) überraschenderweise günstig auf die Rauchgasdichte im Brandfall auswirkt, d.h. die Rauchgasdichte wird verringert.

Vorzugsweise wird das Diol b3) in Mengen von 20 bis 60 Mol-%, besonders bevorzugt von 30 bis 55 Mol-%, und insbesondere von 40 bis 50 Mol-% eingesetzt. Vorzugsweise handelt es sich bei diesem Diol um mindestens eine Verbindung aus der Gruppe bestehend aus Polyethylenglykol (PEG), Diethylenglykol (DEG) und Monoethylenglykol (MEG), besonders bevorzugt sind Diethylenglykol (DEG) und Monoethylenglykol (MEG), insbesondere bevorzugt ist Diethylenglykol (DEG). Unter Polyethylenglykol werden Triethylenglykol und die höheren Oligomere des Ethylenglykols verstanden. Geeignete Polyethylenglykole weisen im Allgemeinen ein zahlenmittlere Molekulargewichte von 50 bis 600 g/mol, vorzugsweise von 55 bis 400 g/mol und insbesondere von 60 bis 200 g/mol und speziell von 62 g/mol bis 150 g/mol auf.

Vorzugsweise wird das Polyetherpolyol b4) in Mengen von 10 bis 40 Mol-%, besonders bevorzugt von 12 bis 30 Mol-%, und insbesondere von 14 bis 25 Mol-% eingesetzt, wobei die Komponente b4) pro kg des Polyesterols B) zu mindestens 200 mmol, bevorzugt zu mindestens 400 mmol, besonders bevorzugt zu mindestens 600 mmol, insbesondere zu mindestens 800 mmol, im Speziellen zu mindestens 1000 mmol eingesetzt wird. Bevorzugt handelt es sich bei der Komponente b4) um ein alkoxyliertes Triol oder Polyol, besonders bevorzugt um ein alkoxyliertes Triol, insbesondere bevorzugt um ein Polyether, hergestellt durch die Addition von Ethylenoxid oder Propylenoxid, bevorzugt Ethylenoxid, an Glycerin oder Trimethylolpropan, bevorzugt Glycerin, als Startermolekül. Die Verwendung von Ethylenoxid führt zu Hartschäumen mit verbessertem Brandverhalten.

In einer bevorzugten Ausführungsform der vorliegenden Erfindung erfolgt die Alkoxylierung des Startermoleküls zur Herstellung der Komponente b4) unter Verwendung eines Katalysators aus der Gruppe bestehend aus Kaliumhydroxid (KOH) und aminischen Alkoxylierungskatalysatoren, wobei die Verwendung von aminischen Alkoxylierungskatalysatoren bevorzugt ist, da die so hergestellten Polyetherole ohne Aufarbeitung in der nachfolgenden Veresterung eingesetzt werden können, während der Polyether bei Verwendung von KOH als Alkoxylierungskatalysator erst neutralisiert und abgetrennt werden muss. Bevorzugte aminische Alkoxylierungskatalysatoren sind ausgewählt aus der Gruppe bestehend aus Dimethylethanolamin (DMEOA), Imidazol und Imidazolderivaten sowie Mischungen daraus, besonders bevorzugt ist Imidazol.

In einer speziellen Ausführungsform der Erfindung besteht das Polyetherpolyol b4) aus dem Umsetzungsprodukt von Glycerin mit Ethylenoxid und/oder Propylenoxid, bevorzugt mit Ethylenoxid. Hierdurch ergibt sich eine besonders hohe Lagerstabilität der Komponente B).

In einer weiteren speziellen Ausführungsform der Erfindung besteht das Polyetherpolyol b4) aus dem Umsetzungsprodukt von Trimethylolpropan mit Ethylenoxid und/oder Propylenoxid, bevorzugt mit Ethylenoxid. Hierdurch ergibt sich ebenfalls eine besonders hohe Lagerstabilität der Komponente B).

Vorzugsweise weist das Polyetherpolyol b4) eine OH-Zahl im Bereich von 150 bis 1250 mg KOH/g, bevorzugt 300 bis 950 mg KOH/g, besonders bevorzugt 500 bis 800 mg KOH/g auf. In diesem Bereich lassen sich besonders günstige mechanische Eigenschaften und/oder Brandschutzeigenschaften erzielen.

In einer besonders bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpolyols b4) im Bereich von 500 bis 800 mg KOH/g, bevorzugt 500 bis 650 mg KOH/g, liegt und Imidazol als Alkoxylierungskatalysator Verwendung findet.

In einer insbesondere bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpolyols b4) im Bereich von 500 bis 800 mg KOH/g, bevorzugt 500 bis 650 mg KOH/g, liegt, Imidazol als Alkoxylierungskatalysator Verwendung findet, und das aliphatische oder cycloaliphatische Diol b3) Diethylenglykol ist, und die Komponente b2) Sojaöl, Rapsöl oder Talg, bevorzugt Talg ist.

Vorzugsweise weist das Polyesterpolyol B) eine zahlengewichtete mittlere Funktionalität von größer oder gleich 2, bevorzugt von größer als 2, besonders bevorzugt von größer als 2,2 und insbesondere von größer als 2,3 auf, was zu einer höheren Vernetzungsdichte des damit hergestellten Polyurethans und damit zu besseren mechanischen Eigenschaften des Polyurethanschaums führt.

Zur Herstellung der Polyesterpolyole B) können die Komponenten b1) bis b4) katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280°C, vorzugsweise 180 bis 260°C, gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole B) werden die organischen Polycarbonsäuren und/oder -derivate und mehrwertigen Alkohole vorteilhafterweise im Molverhältnis von 1 : 1 bis 2,2, vorzugsweise von 1 : 1,05 bis 2,1 und besonders bevorzugt von 1 : 1,1 bis 2,0 polykondensiert.

Die erhaltenen Polyesterpolyole B) weisen im Allgemeinen ein zahlenmittleres Molekulargewicht von 300 bis 3000, vorzugsweise von 400 bis 1000 und insbesondere von 450 bis 800 auf.

Im Allgemeinen ist der Anteil der erfindungsgemäßen Polyesterpolyole B) mindestens 10 Gew.-%, bevorzugt mindestens 20 Gew.-%, besonders bevorzugt mindestens 40 Gew.-% und im Speziellen mindestens 50 Gew.-%, bezogen auf die Summe der Komponenten B) bis H).

Zur Herstellung der Polyurethan-Hartschaumstoffe nach dem erfindungsgemäßen Verfahren finden, neben den oben beschriebenen speziellen Polyesterpolyolen B), die an sich bekannten Aufbaukomponenten Verwendung, zu denen im Einzelnen folgendes auszuführen ist.

### Komponente A

Unter Polyisocyanat wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, beträgt der zahlengewichtete Mittelwert der Funktionalität der eingesetzten Komponente A) mindestens 2.

Als Polyisocyanate A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente A) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methyl-pentamethylendiisocyanat-1,5, Tetramethylendiisocyanat-1,4 und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'-und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate der Komponente A) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDI-basierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, bevorzugt von 2,3 bis 4, insbesondere von 2,4 bis 3,5. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente A) mindestens zwei, besonders bevorzugt mindestens 2,2 und insbesondere mindestens 2,4. Die Funktionalität der Komponente A) beträgt bevorzugt von 2,2 bis 4 und besonders bevorzugt von 2,4 bis 3.

Vorzugsweise beträgt der Gehalt an Isocyanatgruppen der Komponente A) von 5 bis 10 mmol/g, besonders bevorzugt von 6 bis 9 mmol/g, insbesondere von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente A) aus mindestens einem mehrfunktionellen Isocyanat, ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (A) besonders bevorzugt oligomeres Diphenylmethandiisocyanat und weist eine Funktionalität von mindestens 2,4 auf.

Die Viskosität der eingesetzten Komponente A) kann in einem weiten Bereich variieren. Vorzugsweise weist die Komponente A) eine Viskosität von 100 bis 3000 mPa•s, besonders bevorzugt von 200 bis 2500 mPa•s, auf.

### Komponente C

Geeignete Polyesterpolyole C), die sich von den Polyesterolen B) unterscheiden, können beispielsweise aus organischen Dicarbonsäuren mit 2 bis 12 Kohlenstoffatomen, vorzugsweise aromatischen, oder Gemischen aus aromatischen und aliphatischen Dicarbonsäuren und mehrwertigen Alkoholen, vorzugsweise Diolen, mit 2 bis 12 Kohlenstoffatomen, vorzugsweise 2 bis 6 Kohlenstoffatomen hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Verwendet werden können ebenso Derivate dieser Dicarbonsäuren, wie beispielsweise Dimethylterephthalat. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-caprolacton oder Hydroxycarbonsäuren, z.B. ω-Hydroxycapronsäure.

Zur Herstellung der weiteren Polyesterpolyole C) kommen auch biobasierte Ausgangsstoffe und/oder deren Derivate in Frage, wie z.B. Rizinusöl, Polyhydroxyfettsäuren, Ricinolsäure, Hydroxyl-modifizierten Ölen, Weintraubenkernöl, schwarzes Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxylmodifizierten Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Im Allgemeinen beträgt das Massenverhältnis der Polyesterole B) zu den weiteren Polyesterpolyolen C) mindestens 0,1, bevorzugt mindestens 0,5, besonders bevorzugt mindestens 1,0 und insbesondere mindestens 2.

In einer insbesondere bevorzugten Ausführungsform werden keine weiteren Polyesterpolyole C) mit umgesetzt.

### Komponente D

Als Komponente D) können ein oder mehrere Polyetherpolyole D) mit umgesetzt werden. Die Polyetherole D) können nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diaminodiphenylmethan. Besonders bevorzugt sind die genannten diprimären Amine, beispielsweise Ethylendiamin.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei- oder mehrwertige Alkohole, wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose.

Die Polyetherpolyole D), vorzugsweise Polyoxypropylenpolyole und Polyoxyethylenpolyole, besonders bevorzugt Polyoxyethylenpolyole, besitzen eine Funktionalität von vorzugsweise 2 bis 6, besonders bevorzugt 2 bis 4, insbesondere 2 bis 3 und im Speziellen 2 und zahlenmittlere Molekulargewichte von 150 bis 3000 g/mol, vorzugsweise 200 bis 2000 g/mol und insbesondere 250 bis 1000 g/mol.

In einer bevorzugten Ausführungsform der Erfindung wird ein alkoxyliertes Diol, bevorzugt ein ethoxyliertes Diol, beispielsweise ethoxylierter Ethylenglykol, als Polyetherpolyol D) mitverwendet, vorzugsweise handelt es sich dabei um Polyethylenglykol.

In einer speziellen Ausführungsform der Erfindung besteht die Polyetherol-Komponente D) ausschließlich aus Polyethylenglykol, vorzugsweise mit einem zahlenmittleren Molekulargewicht von 250 bis 1000 g/mol.

Im Allgemeinen beträgt der Anteil der Polyetherpolyole D) 0 bis 11 Gew.-%, bevorzugt 2 bis 9 Gew.-%, besonders bevorzugt 4 bis 8 Gew.-%, bezogen auf die Summe der Komponenten B) bis H).

Im Allgemeinen ist das Massenverhältnis der Summe der Komponenten B) und C) zu der Komponente D) größer als 1, bevorzugt größer als 2, besonders bevorzugt größer als 7, insbesondere bevorzugt größer als 10 und speziell bevorzugt größer als 12.

Weiterhin ist das Massenverhältnis der Summe der Komponenten B) und C) zu der Komponente D) im Allgemeinen kleiner als 80, bevorzugt kleiner als 40, besonders bevorzugt kleiner als 30, insbesondere bevorzugt kleiner als 20, speziell bevorzugt kleiner als 16 und im Speziellen kleiner als 13.

### Komponente E

Als Flammschutzmittel E) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylalkohol, Tribromneopentylalkohol und PHT-4-Diol, sowie chlorierte Phosphate wie Tris-(2-chlorethyl)phosphat, Tris-(2-chlorpropyl)phosphat (TCPP), Tris-(1,3-dichlorpropyl)phosphat, Trikresylphosphat, Tris-(2,3-dibrompropyl)phosphat, Tetrakis-(2-chlorethyl)ethylendiphosphat, Dimethylmethanphosphonat, Diethanolaminomethylphosphonsäurediethylester sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP) oder Diphenylkresylphosphat (DPK) als flüssige Flammschutzmittel eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphate und Melamin sowie gegebenenfalls Maisstärke oder Ammoniumpolyphosphat, Melamin, Blähgraphit und gegebenenfalls aromatische Polyester zum Flammfestmachen der Polyurethan-Hartschaumstoffe verwendet werden.

Bevorzugte Flammschutzmittel weisen keine mit Isocyanatgruppen reaktive Gruppen auf. Vorzugsweise sind die Flammschutzmittel bei Raumtemperatur flüssig. Besonders bevorzugt sind TCPP, DEEP, TEP, DMPP und DPK.

Im Allgemeinen beträgt der Anteil des Flammschutzmittels E) 2 bis 50 Gew.-%, bevorzugt 5 bis 30 Gew.-%, besonders bevorzugt 8 bis 25 Gew.-%, bezogen auf die Komponenten B) bis H).

### Komponente F

Treibmittel F), welche zur Herstellung der Polyurethan-Hartschaumstoffe verwendet werden, sind vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel, wie niedrig siedende Kohlenwasserstoffe eingesetzt werden. Geeignet sind insbesondere Flüssigkeiten, welche gegenüber den Polyisocyanaten A) inert sind und Siedepunkte unter 100°C, vorzugsweise unter 50°C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und isoPentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden keine halogenierten Kohlenwasserstoffe als Treibmittel verwendet. Vorzugsweise werden als chemische Treibmittel Wasser, Ameisensäure-Wasser-Mischungen oder Ameisensäure verwendet, besonders bevorzugte chemische Treibmittel sind Ameisensäure-Wasser-Mischungen oder Ameisensäure. Vorzugsweise werden als physikalische Treibmittel Pentanisomere oder Mischungen von Pentanisomeren verwendet.

Die chemischen Treibmittel können dabei alleine, d.h. ohne Zusatz von physikalischen Treibmitteln, oder zusammen mit physikalischen Treibmitteln verwendet werden. Vorzugsweise werden die chemischen Treibmittel zusammen mit physikalischen Treibmitteln verwendet, wobei Ameisensäure-Wasser-Mischungen oder reine Ameisensäure zusammen mit Pentanisomeren oder Gemischen aus Pentanisomeren bevorzugt sind.

Die Treibmittel sind entweder ganz oder teilweise in der Polyolkomponente (d.h. B+C+D+E+F+G+H) gelöst oder werden direkt vor dem Verschäumen der Polyolkomponente über einen Statikmischer zudosiert. Für gewöhnlich liegen Wasser, Ameisensäure-Wasser-Mischungen oder Ameisensäure ganz oder teilweise in der Polyolkomponente gelöst vor und wird das physikalische Treibmittel (beispielsweise Pentan) und gegebenenfalls der Rest des chemischen Treibmittels "online" dosiert.

Zu der Polyolkomponente wird in situ Pentan, eventuell ein Teil des chemischen Treibmittels, sowie teilweise oder vollständig der Katalysator zugegeben. Die Hilfs- und Zusatzstoffe, wie auch die Flammschutzmittel sind bereits im Polyolblend enthalten.

Die eingesetzte Menge des Treibmittels bzw. der Treibmittelmischung liegt bei 1 bis 45 Gew.-%, vorzugsweise 1 bis 30 Gew.-%, besonders bevorzugt 1,5 bis 20 Gew.-%, jeweils bezogen auf die Summe der Komponenten B) bis H).

Dient Wasser, Ameisensäure oder eine Ameisensäure-Wasser-Mischung als Treibmittel, so wird es vorzugsweise der Polyolkomponente (B+C+D+E+F+G+H) in einer Menge von 0,2 bis 10 Gew.-%, bezogen auf die Komponente B), zugesetzt. Der Zusatz des Wassers, der Ameisensäure oder der Ameisensäure-Wasser-Mischung kann in Kombination mit dem Einsatz der anderen beschriebenen Treibmittel erfolgen. Bevorzugt wird Ameisensäure oder eine Ameisensäure-Wasser-Mischung in Kombination mit Pentan eingesetzt.

### Komponente G

Als Katalysatoren G) zur Herstellung der Polyurethan-Hartschaumstoffe werden insbesondere Verbindungen verwendet, die die Reaktion der reaktive Wasserstoffatome, insbesondere Hydroxylgruppen enthaltenden Verbindungen der Komponenten B) bis H) mit den Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo.-(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)-ethanol, N,N',N"-Tris-(dialkylaminoalkyl)hexahydrotriazine, z.B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen. Vorzugsweise verwendet werden 0,001 bis 10 Gew.-Teile Katalysator bzw. Katalysatorkombination, bezogen (d.h. gerechnet) auf 100 Gewichtsteile der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

### Komponente H

Der Reaktionsmischung zur Herstellung der Polyurethan-Hartschaumstoffe können gegebenenfalls noch weitere Hilfsmittel und/oder Zusatzstoffe H) zugesetzt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-Teile, bezogen (d.h. gerechnet) auf 100 Gew.-Teile der Komponente B), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A) bis H), zugegeben, wobei jedoch der Gehalt an Matten, Vliesen und Geweben aus natürlichen und synthetischen Fasern Werte bis 80 Gew.-%, bezogen auf das Gewicht der Komponenten A) bis H), erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Ein weiterer Gegenstand der vorliegenden Erfindung ist eine Polyolkomponente enthaltend:
10 bis 90 Gew.-% der Polyesterole B),
0 bis 60 Gew.-% der weiteren Polyesterpoylole C),
0 bis 11 Gew.-% der Polyetherpolyole D),
2 bis 50 Gew.-% Flammschutzmittel E),
1 bis 45 Gew.-% Treibmittel F),
0,001 bis 10 Gew.-% Katalysatoren G), und
0,5 bis 20 Gew.-% weitere Hilfs- und Zusatzstoffe H),

jeweils wie vorstehend definiert und jeweils bezogen auf das Gesamtgewicht der Komponenten B) bis H), wobei sich die Gew.-% zu 100 Gew.-% ergänzen, und wobei das Massenverhältnis der Summe der Komponenten B) und C) zu Komponente D) mindestens 1 beträgt.

Besonders bevorzugt umfasst die Polyolkomponente
50 bis 90 Gew.-% der Polyesterole B),
0 bis 20 Gew.-% der weiteren Polyesterpoylole C),
2 bis 9 Gew.-% der Polyetherpolyole D),
5 bis 30 Gew.-% Flammschutzmittel E),
1 bis 30 Gew.-% Treibmittel F),
0,5 bis 10 Gew.-% Katalysatoren G), und
0,5 bis 20 Gew.-% weitere Hilfs- und Zusatzstoffe H),
jeweils wie vorstehend definiert und jeweils bezogen auf das Gesamtgewicht der Komponenten B) bis H), wobei sich die Gew.-% zu 100 Gew.-% ergänzen, und wobei das Massenverhältnis der Summe der Komponenten B) und C) zu Komponente D) mindestens 2 beträgt.

Weiterhin ist das Massenverhältnis der Summe der Komponenten B) und gegebenenfalls C) zu der Komponente D) in den erfindungsgemäßen Polyolkomponenten im Allgemeinen kleiner als 80, bevorzugt kleiner als 40, besonders bevorzugt kleiner als 30, insbesondere kleiner als 20, speziell bevorzugt kleiner als 16 und ganz speziell bevorzugt kleiner als 13.

Zur Herstellung der erfindungsgemäßen Polyurethan-Hartschaumstoffe werden die gegebenenfalls modifizierten organischen Polyisocyanate A), die speziellen erfindungsgemäßen Polyesterpolyole B), gegebenenfalls die weiteren Polyesterpolyole C), die Polyetherole D) und die weiteren Komponenten E) bis H) in solchen Mengen vermischt, dass das Äquivalenzverhältnis von NCO-Gruppen der Polyisocyanate A) zur Summe der reaktiven Wasserstoffatome der Komponenten B), gegebenenfalls C) sowie D) bis H), 1 bis 6:1, vorzugsweise 1,6 bis 5:1 und insbesondere 2,5 bis 3,5:1, beträgt.

Die Erfindung wird durch die nachstehenden Beispiele näher erläutert.

### Beispiele

### Polyesterol 1 (nicht erfindungsgemäß):

Veresterungsprodukt von Terephthalsäure (30,5 Mol-%), Ölsäure (9,2 Mol-%), Diethylenglykol (36,6 Mol-%) und einem Polyetherpolyol (23,7 Mol-%) auf Basis von Trimethylolpropan und Ethylenoxid mit einer OH-Funktionalität von 3 und einer Hydroxylzahl von 610 mg KOH/g, hergestellt in Gegenwart von Imidazol als Alkoxylierungskatalysator. Das Polyether wurde ohne Aufarbeitung in der nachfolgenden Veresterung eingesetzt. Das Polyesterol 1 wies eine Hydroxylfunktionalität von 2,49 und eine Hydroxylzahl von 245 mg KOH/g auf.

### Polyesterol 2 (erfindungsgemäß):

Veresterungsprodukt von Terephthalsäure (35,4 Mol-%), Sojaöl (2,1 Mol-%), Diethylenglykol (44,3 Mol-%) und einem Polyetherpolyol (18,2 Mol-%) auf Basis von Trimethylolpropan und Ethylenoxid mit einer OH-Funktionalität von 3 und einer Hydroxylzahl von 610 mg KOH/g, hergestellt in Gegenwart von Imidazol als Alkoxylierungskatalysator. Das Polyetherpolyol wurde ohne Aufarbeitung in der nachfolgenden Veresterung eingesetzt. Das Polyesterol 2 wies eine Hydroxylfunktionalität von 2,48 und eine Hydroxylzahl von 251 mg KOH/ auf.

### Polyesterol 3 (erfindungsgemäß):

Veresterungsprodukt von Terephthalsäure (36,0 Mol-%), Sojaöl (1,4 Mol-%), Diethylenglykol (46,9 Mol-%) und einem Polyetherpolyol (15,7 Mol-%) auf Basis Trimethylolpropan und Ethylenoxid mit einer OH-Funktionalität von 3 und einer Hydroxylzahl von 610 mg KOH/g, hergestellt in Gegenwart von Imidazol als Alkoxylierungskatalysator. Das Polyetherpolyol wurde ohne Aufarbeitung in der nachfolgenden Veresterung eingesetzt. Das Polyesterol 3 wies eine Hydroxylfunktionalität von 2,46 und eine Hydroxylzahl von 253 mg KOH/g auf.

### Polyesterol 4 (nicht erfindungsgemäß):

Veresterungsprodukt von Terephthalsäure (37,0 Mol-%), Sojaöl (0,7 Mol-%), Diethylenglykol (48,2 Mol-%) und einem Polyetherpolyol (14,1 Mol-%) auf Basis Trimethylolpropan und Ethylenoxid mit einer OH-Funktionalität von 3 und einer Hydroxylzahl von 610 mg KOH/g, hergestellt in Gegenwart von Imidazol als Alkoxylierungskatalysator. Das Polyetherpolyol wurde ohne Aufarbeitung in der nachfolgenden Veresterung eingesetzt. Das Polyesterol 4 wies eine Hydroxylfunktionalität von 2,49 und eine Hydroxylzahl von 250 mg KOH/g auf.

### Bestimmung der Verarbeitbarkeit:

Die Verarbeitbarkeit wurde bestimmt, indem die Schaumbildung bei der Verarbeitung betrachtet wurde. Bildeten sich dabei große Treibmittelblasen, die an der Schaumoberfläche platzten und diese somit aufreißen ließen, wurde dieses als "Abbläser" bezeichnet und das System war nicht störungsfrei verarbeitbar. War dieses Störungsbild nicht zu beobachten, war die Verarbeitung störungsfrei möglich.

### Rauchgasentwicklung

Die Rauchgasentwicklung wurde in einem Cone-Kaloriemeter unter Verwendung eines Helium-Neon-Lasers und einer Photodiode gemessen und nach ISO 5660-2 als gesamte Rauchentwicklung [m²/m²] und ASEA [m²/kg] (durchschnittliche spezifische Extinktionsfläche) bestimmt.

### Herstellung von Polyurethan-Hartschaumstoffen (Variante 1):

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyolkomponente zu Isocyanat von 100:160 verschäumt.

### Polyolkomponente:

| | |
|---|---|
| 40,0 Gewichtsteile | Polyesterol gemäß Beispielen bzw. Vergleichsbeispielen; |
| 27,0 Gewichtsteile | Polyetherpolyol mit einer OHZ von ca. 490 mg KOH/g, hergestellt durch Polyaddition von Propylenoxid an eine Saccharose/Glycerin-Mischung als Startermolekül (66,4 Gew.-% PO, 20,3 Gew.-% Saccharose, 13.3 Gew.-% Glycerin); |
| 5,5 Gewichtsteile | Polyetherol bestehend aus dem Ether von Ethylenglykol und Ethylenoxid mit einer Hydroxylfunktionalität von 2 und einer Hydroxylzahl von 200 mg KOH/g; |
| 25 Gewichtsteile | Flammschutzmittel Trischlorisopropylphosphat (TCPP); |
| 2,5 Gewichtsteile | Stabilisator Niax Silicone L 6635 (siliconhaltiger Stabilisator); Zusatzstoffe zur Polyolkomponente: |
| 5,5 Gewichtsteile | Pentan S 80:20 (80 Gew.-% n-Pentan und 20 Gew.-% Isopentan); |
| ca. 2,6 Gewichtsteile | Wasser; |
| 1,5 Gewichtsteile | Kaliumacetat-Lösung (47 Gew.-% in Ethylenglykol); |
| ca 1,1 Gewichtsteile | Dimethylcyclohexylamin |

### Isocyanatkomponente:

160 Gewichtsteile Lupranat® M50 (polymeres Methylendiphenyldiisocyanat (PMDI) mit einer Viskosität von ca. 500 mPa*s bei 25°C).

Es wurden 50 mm dicke Sandwichelemente nach dem Doppelbandverfahren hergestellt. Die Rohdichte wurde dabei bei konstantem Pentangehalt von 5,5 Teilen durch Variation des Wassergehalts auf 38 +/- 1 g/L eingestellt. Die Abbindezeit wurde ferner auf 25 +/- 1 s durch Variation des Anteils des Dimethylcyclohexylamins eingestellt.

### Herstellung von Polyurethan-Hartschaumstoffen (Variante 2):

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyolkomponente zu Isocyanat von 100:180 verschäumt.

### Polyolkomponente:

| | |
|---|---|
| 40,0 Gewichtsteile | Polyesterol gemäß Beispielen bzw. Vergleichsbeispielen; |
| 27,0 Gewichtsteile | Polyetherpolyol mit einer OHZ von ca. 490 mg KOH/g hergestellt durch Polyaddition von Propylenoxid an einer Saccharose/Glycerin-Mischung als Startermolekül (Zusammensetzung wie Variante 1); |
| 5,5 Gewichtsteile | Polyetherol bestehend aus dem Ether von Ethylenglykol und Ethylenoxid mit einer Hydroxylfunktionalität von 2 und einer Hydroxylzahl von 200 mg KOH/g; |
| 25 Gewichtsteile | Flammschutzmittel Trischlorisopropylphosphat (TCPP); |
| 2,5 Gewichtsteile | Stabilisator Niax Silicone L 6635 (siliconhaltiger Stabilisator); Zusatzstoffe zur Polyolkomponente: |
| 5,5 Gewichtsteile | Pentan S 80:20 (80 Gew.-% n-Pentan und 20 Gew.-% Isopentan); |
| ca. 2,8 Gewichtsteile | Wasser; |
| 1,5 Gewichtsteile | Kaliumacetat-Lösung (47 Gew.-% in Ethylenglykol); |
| ca 1,3 Gewichtsteile | Dimethylcyclohexylamin. |

### Isocyanatkomponente:

180 Gewichtsteile Lupranat® M50 (polymeres Methylendiphenyldiisocyanat (PMDI) mit einer Viskosität von ca. 500 mPa*s bei 25°C)

Es wurden 50 mm dicke Sandwichelemente nach dem Doppelbandverfahren hergestellt. Die Rohdichte wurde dabei bei konstantem Pentangehalt von 5,5 Teilen durch Variation des Wassergehalts auf 38 +/- 1 g/L eingestellt. Die Abbindezeit wurde ferner auf 25 +/- 1 s durch Variation des Anteils des Dimethylcyclohexylamins eingestellt.

### Herstellung von Polyurethan-Hartschaumstoffen (Variante 3):

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyol zu Isocyanat von 100:200 verschäumt.

### Polyolkomponente:

| | |
|---|---|
| 40,0 Gewichtsteile | Polyesterol gemäß Beispielen bzw. Vergleichsbeispielen; |
| 27,0 Gewichtsteile | Polyetherpolyol mit einer OHZ von ca. 490 mg KOH/g hergestellt durch Polyaddition von Propylenoxid an einer Saccharose/Glycerin-Mischung als Startermolekül (Zusammensetzung wie Variante 1); |
| 5,5 Gewichtsteile | Polyetherol bestehend aus dem Ether von Ethylenglykol und Ethylenoxid mit einer Hydroxylfunktionalität von 2 und einer Hydroxylzahl von 200 mg KOH/g; |
| 25 Gewichtsteile | Flammschutzmittel Trischlorisopropylphosphat (TCPP); |
| 2,5 Gewichtsteile | Stabilisator Niax Silicone L 6635 (siliconhaltiger Stabilisator); |
| 5,5 Gewichtsteile | Pentan S 80:20; |
| ca. 3,1 Gewichtsteile | Wasser; |
| 1,5 Gewichtsteile | Kaliumacetat-Lösung (47 Gew.-% in Ethylenglykol); |
| ca 1,5 Gewichtsteile | Dimethylcyclohexylamin. |

### Isocyanatkomponente:

200 Gewichtsteile Lupranat® M50 (polymeres Methylendiphenyldiisocyanat (PMDI) mit einer Viskosität von ca. 500 mPa*s bei 25 °C)

Es wurden 50 mm dicke Sandwichelemente nach dem Doppelbandverfahren hergestellt. Die Rohdichte wurde dabei bei konstantem Pentangehalt von 5,5 Teilen durch Variation des Wassergehalts auf 38 +/- 1 g/L eingestellt. Die Abbindezeit wurde ferner auf 25 +/- 1 s durch Variation des Anteils des Dimethylcyclohexylamins eingestellt.

Die Ergebnisse sind in Tabelle 1 zusammengefasst.

**Tabelle 1: Ergebnisse der Versuche zur Herstellung von 50 mm dicken Sandwichelementen nach dem Doppelbandverfahren**

| Variante | 1 | 2 | 3 |
|---|---|---|---|
| Mischungsverhältnis | 160 | 180 | 200 |

| Polyesterol 1 | | | |
|---|---|---|---|
| optische Beurteilung | gut | gut | gut |
| Verarbeitung | störungsfrei | störungsfrei | störungsfrei |

| Polyesterol 2 | | | |
|---|---|---|---|
| optische Beurteilung | gut | gut | gut |
| Verarbeitung | störungsfrei | störungsfrei | störungsfrei |

| Polyesterol 3 | | | |
|---|---|---|---|
| optische Beurteilung | gut | gut | Oberflächenstörungen |
| Verarbeitung | störungsfrei | störungsfrei | Abbläser |

| Polyesteryol 4 | | | |
|---|---|---|---|
| optische Beurteilung | Oberflächenstörungen | Oberflächenstörungen | Oberflächenstörungen |
| Verarbeitung | Abbläser | Abbläser | Abbläser |

Tabelle 1 zeigt, dass bei den erfindungsgemäßen Polyurethan-Hartschaumstoffen mit zunehmendem Anteil an Fettsäuretriglycerid im verwendeten Polyesterol die Verarbeitungseigenschaften verbessert werden. Die aus den Polyesterolen 1 und 2 hergestellten Hartschäume konnten bei allen Varianten, d.h. mit allen Mischungsverhältnissen (160/180/200), störungsfrei und mit guter Oberfläche hergestellt werden. Der aus dem Polyester 3 hergestellte Hartschaum konnte bei der Variante 3 (Mischungsverhältnis 200) nicht störungsfrei und nur mit Oberflächendefekten hergestellt werden. Der aus dem Polyester 4 hergestellte Hartschaum konnte bei allen Varianten und allen Mischungsverhältnissen nicht störungsfrei hergestellt werden. Die Elemente aus allen drei Varianten wiesen deutliche Oberflächendefekte auf.

**Tabelle 2: Ergebnisse der Rauchentwicklung aus den Cone Calorimeter-Prüfungen nach ISO 5660 Teil 1 und 2 mit Schaumproben aus 50 mm dicken Sandwichelementen, die nach dem Doppelbandverfahren hergestellt wurden**

| Variante | 1 |
|---|---|
| Mischungsverhältnis | 160 |

| Polyesterol 1 | |
|---|---|
| Gesamte Rauchentwicklung [m²/m²] | 990 |
| ASEA [m²/kg] | 523 |

| Polyesterol 2 | |
|---|---|
| Gesamte Rauchentwicklung [m²/m²] | 929 |
| ASEA [m²/kg] | 509 |

| Polyesterol 3 | |
|---|---|
| Gesamte Rauchentwicklung [m²/m²] | 832 |
| ASEA [m²/kg] | 457 |

| Polyesterol 4 | |
|---|---|
| Gesamte Rauchentwicklung [m²/m²] | 650 |
| ASEA [m²/kg] | 363 |

Tabelle 2 zeigt, dass mit abnehmendem Fettsäuretriglycerid-Gehalt im verwendeten Polyesterol die Rauchgasentwicklung abnimmt.

## Patentansprüche

1. Polyesterol erhältlich durch Umsetzung von
b1) 10 bis 70 Mol-% mindestens einer Verbindung, ausgewählt aus der Gruppe bestehend aus Terephthalsäure, Dimethylterephthalat, Polyethylenterephthalat, Phthalsäureanhydrid, Phthalsäure und Isophthalsäure,
b2) 0,8 bis 3,2 Mol-% eines Fettsäuretriglycerids,
b3) 10 bis 70 Mol-% eines Diols, ausgewählt aus der Gruppe bestehend aus Ethylenglykol, Diethylenglykol und Polyethylenglykolen,
b4) 5 bis 50 Mol-% eines Polyetherpolyols mit einer Funktionalität größer 2, wobei pro kg des Polyesterols mindestens 200 mmol der Komponente b4) eingesetzt werden,
wobei die Summe der Komponenten b1) bis b4) 100 Mol-% ergibt.

2. Polyesterol nach Anspruch 1, **dadurch gekennzeichnet, dass** das Polyetherpolyol b4) ein Polyetherpolyol mit einer Funktionalität größer 2 ist, das durch Alkoxylierung eines Polyols mit einer Funktionalität größer 2 erhalten wird.

3. Polyesterol nach Anspruch 1 oder 2, **dadurch gekennzeichnet, dass** das Polyetherpolyol b4) hergestellt ist durch Alkoxylierung eines Triols, ausgewählt aus der Gruppe bestehend aus Trimethylolpropan, Glycerin und deren Gemischen.

4. Polyesterol nach einem der Ansprüche 1 bis 3, **dadurch gekennzeichnet, dass** das Polyetherpolyol b4) durch Alkoxylierung mit Ethylenoxid hergestellt ist.

5. Polyesterol nach Anspruch 4, **dadurch gekennzeichnet, dass** das Polyetherpolyol b4) durch Alkoxylierung mit Ethylenoxid in Gegenwart eines aminischen Alkoxylierungskatalysators hergestellt ist.

6. Polyesterol nach einem der Ansprüche 1 bis 5, **dadurch gekennzeichnet, dass** die Komponente b1) ausgewählt ist aus der Gruppe bestehend aus Terephthalsäure, Dimethylterephthalat, Polyethylenterephthalat, Phthalsäureanhydrid und Phthalsäure.

7. Polyesterol nach einem der Ansprüche 1 bis 6, **dadurch gekennzeichnet, dass** das Fettsäuretriglycerid b2) ausgewählt ist aus der Gruppe bestehend aus Sojaöl, Rapsöl, Talg und deren Gemischen.

8. Polyesterol nach einem der Ansprüche 1 bis 7, **dadurch gekennzeichnet, dass** das Diol b3) Diethylenglykol ist.

9. Polyesterol nach einem der Ansprüche 1 bis 8, **dadurch gekennzeichnet, dass** pro kg Polyesterol mindestens 400 mmol des Polyetherpolyols b4) eingesetzt werden.

10. Polyesterol nach einem der Ansprüche 1 bis 9 mit einer mittleren Funktionalität von größer oder gleich 2.

11. Verfahren zur Herstellung von Polyurethan-Hartschaumstoffen oder Polyisocyanurat-Hartschaumstoffen umfassend die Umsetzung von
A) mindestens einem Polyisocyanat,
B) mindestens einem Polyesterol gemäß einem der Ansprüche 1 bis 10,
C) optional einem oder mehreren weiteren Polyesterpolyolen, die sich von denen der Komponente B) unterscheiden,
D) optional einem oder mehreren Polyetherpolyolen,
E) optional einem oder mehreren Flammschutzmitteln,
F) einem oder mehreren Treibmitteln,
G) einem oder mehreren Katalysatoren, und
H) optional weiteren Hilfsmitteln oder Zusatzstoffen.

12. Verfahren nach Anspruch 11, **dadurch gekennzeichnet, dass** das Massenverhältnis der Summe der Komponenten B) und C) zu Komponente D) mindestens 1 ist.

13. Verfahren nach Anspruch 11 oder 12, **dadurch gekennzeichnet, dass** das Massenverhältnis der Summe der Komponenten B) und C) zu Komponente D) kleiner 80 ist.

14. Verfahren nach einem der Ansprüche 11 bis 13, **dadurch gekennzeichnet, dass** das Massenverhältnis der Polyesterole B) zu den weiteren Polyesterpolyolen C) mindestens 0,1 beträgt.

15. Verfahren nach einem der Ansprüche 11 bis 14, **dadurch gekennzeichnet, dass** keine weiteren Polyesterpolyole C) mit umgesetzt werden.

16. Verfahren nach einem der Ansprüche 12 bis 14, **dadurch gekennzeichnet, dass** als Komponente D) ausschließlich Polyethylenglykol mit umgesetzt wird.

17. Polyurethan-Hartschaumstoff, erhältlich nach dem Verfahren gemäß einem der Ansprüche 12 bis 16.

18. Verwendung der Polyurethan-Hartschaumstoffe gemäß Anspruch 17 zur Herstellung von Sandwichelementen mit starren oder flexiblen Deckschichten.

19. Polyolkomponente enthaltend
B) 10 bis 90 Gew.-% Polyesterole gemäß einem der Ansprüche 1 bis 10,
C) 0 bis 60 Gew.-% weiterer Polyesterpoylole C), die sich von denen der Komponente B) unterscheiden,
D) 0 bis 11 Gew.-% Polyetherpolyole,
E) 2 bis 50 Gew.-% Flammschutzmittel,
F) 1 bis 45 Gew.-% Treibmittel,
G) 0,001 bis 10 Gew.-% Katalysatoren, und
H) 0,5 bis 20 Gew.-% weiterer Hilfs- und Zusatzstoffe,
wobei die Summe der Komponenten B) bis H) 100 Gew.-% ergibt, und wobei das Massenverhältnis der Summe der Komponenten B) und C) zu Komponente D) mindestens 1 beträgt.

## Claims

1. A polyesterol obtainable by reaction of
b1) from 10 to 70 mol% of at least one compound selected from the group consisting of terephthalic acid, dimethyl terephthalate, polyethylene terephthalate, phthalic anhydride, phthalic acid and isophthalic acid,
b2) from 0.8 to 3.2 mol% of a fatty acid triglyceride,
b3) from 10 to 70 mol% of a diol selected from the group consisting of ethylene glycol, diethylene glycol and polyethylene glycols,
b4) from 5 to 50 mol% of a polyether polyol having a functionality above 2, wherein at least 200 mmol of component b4) are used per kg of the polyesterol,
wherein the sum total of components b1) to b4) is 100 mol%.

2. The polyesterol according to claim 1 wherein said polyether polyol b4) is a polyether polyol having a functionality above 2 and is obtained by alkoxylating a polyol having a functionality above 2.

3. The polyesterol according to claim 1 or 2 wherein said polyether polyol b4) is obtained by alkoxylating a triol selected from the group consisting of trimethylolpropane, glycerol and mixtures thereof.

4. The polyesterol according to any of claims 1 to 3 wherein said polyether polyol b4) is obtained by alkoxylation with ethylene oxide.

5. The polyesterol according to claim 4 wherein said polyether polyol b4) is obtained by alkoxylation with ethylene oxide in the presence of an aminic alkoxylation catalyst.

6. The polyesterol according to any of claims 1 to 5 wherein said component b1) is selected from the group consisting of terephthalic acid, dimethyl terephthalate, polyethylene terephthalate, phthalic anhydride and phthalic acid.

7. The polyesterol according to any of claims 1 to 6 wherein said fatty acid triglyceride b2) is selected from the group consisting of soybean oil, rapeseed oil, tallow and mixtures thereof.

8. The polyesterol according to any of claims 1 to 7 wherein said diol b3) is diethylene glycol.

9. The polyesterol according to any of claims 1 to 8 wherein at least 400 mmol of polyether polyol b4) are used per kg of polyesterol.

10. The polyesterol according to any of claims 1 to 9 having an aaverage functionality of not less than 2.

11. A process for producing rigid polyurethane foams or rigid polyisocyanurate foams comprising the reaction of
A) at least one polyisocyanate,
B) at least one polyesterol according to any of claims 1 to 10,
C) optionally one or more further polyester polyols other than those of component B),
D) optionally one or more polyether polyols,
E) optionally one or more flame retardants,
F) one or more blowing agents,
G) one or more catalysts, and
H) optionally further auxiliaries or admixture agents.

12. The process according to claim 11 wherein the mass ratio of total components B) and C) to component D) is at least 1.

13. The process according to claim 11 or 12 wherein the mass ratio of total components B) and C) to component D) is below 80.

14. The process according to any of claims 11 to 13 wherein the mass ratio of polyesterols B) to the further polyester polyols C) is at least 0.1.

15. The process according to any of claims 11 to 14 wherein no further polyester polyols C) are used.

16. The process according to any of claims 12 to 14 wherein only polyethylene glycol is used as component D).

17. A rigid polyurethane foam obtainable by the process according to any of claims 12 to 16.

18. The use of rigid polyurethane foams according to claim 17 for producing sandwich elements having rigid or flexible outer layers.

19. A polyol component comprising
B) from 10 to 90 wt% of polyesterols according to any of claims 1 to 10,
C) from 0 to 60 wt% of further polyester polyols C) other than those of component B),
D) from 0 to 11 wt% of polyether polyols,
E) from 2 to 50 wt% of flame retardants,
F) from 1 to 45 wt% of blowing agents,
G) from 0.001 to 10 wt% of catalysts, and
H) from 0.5 to 20 wt% of further auxiliary and admixture agents,
wherein the sum total of components B) to H) is 100 wt% and wherein the mass ratio of total components B) and C) to component D) is at least 1.

## Revendications

1. Polyestérol, pouvant être obtenu par mise en réaction de
b1) 10 à 70 % en moles d'au moins un composé, choisi dans le groupe constitué par l'acide téréphtalique, le téréphtalate de diméthyle, le téréphtalate de polyéthylène, l'anhydride de l'acide phtalique, l'acide phtalique et l'acide isophtalique,
b2) 0,8 à 3,2 % en moles d'un triglycéride d'acide gras,
b3) 10 à 70 % en moles d'un diol, choisi dans le groupe constitué par l'éthylène glycol, le diéthylène glycol et les polyéthylène glycols,
b4) 5 à 50 % en moles d'un polyéther-polyol ayant une fonctionnalité supérieure à 2,
au moins 200 mmoles du composant b4) étant utilisé par kg du polyestérol,
la somme des composants b1) à b4) étant de 100 % en moles.

2. Polyestérol selon la revendication 1, **caractérisé en ce que** le polyéther-polyol b4) est un polyéther-polyol ayant une fonctionnalité supérieure à 2, qui est obtenu par alcoxylation d'un polyol ayant une fonctionnalité supérieure à 2.

3. Polyestérol selon la revendication 1 ou 2, **caractérisé en ce que** le polyéther-polyol b4) est fabriqué par alcoxylation d'un triol, choisi dans le groupe constitué par le triméthylolpropane, la glycérine et leurs mélanges.

4. Polyestérol selon l'une quelconque des revendications 1 à 3, **caractérisé en ce que** le polyéther-polyol b4) est fabriqué par alcoxylation avec de l'oxyde d'éthylène.

5. Polyestérol selon la revendication 4, **caractérisé en ce que** le polyéther-polyol b4) est fabriqué par alcoxylation avec de l'oxyde d'éthylène en présence d'un catalyseur d'alcoxylation aminé.

6. Polyestérol selon l'une quelconque des revendications 1 à 5, **caractérisé en ce que** le composant b1) est choisi dans le groupe constitué par l'acide téréphtalique, le téréphtalate de diméthyle, le téréphtalate de polyéthylène, l'anhydride de l'acide phtalique et l'acide phtalique.

7. Polyestérol selon l'une quelconque des revendications 1 à 6, **caractérisé en ce que** le triglycéride d'acide gras b2) est choisi dans le groupe constitué par l'huile de soja, l'huile de ricin, le suif et leurs mélanges.

8. Polyestérol selon l'une quelconque des revendications 1 à 7, **caractérisé en ce que** le diol b3) est le diéthylène glycol.

9. Polyestérol selon l'une quelconque des revendications 1 à 8, **caractérisé en ce qu'**au moins 400 mmoles du polyéther-polyol b4) est utilisé par kg du polyestérol.

10. Polyestérol selon l'une quelconque des revendications 1 à 9, ayant une fonctionnalité moyenne supérieure ou égale à 2.

11. Procédé de fabrication de mousses dures de polyuréthane ou de mousses dures de polyisocyanurate comprenant la mise en réaction de
A) au moins un polyisocyanate,
B) au moins un polyestérol selon l'une quelconque des revendications 1 à 10,
C) éventuellement un ou plusieurs polyester-polyols supplémentaires, qui diffèrent de ceux du composant B),
D) éventuellement un ou plusieurs polyéther-polyols,
E) éventuellement un ou plusieurs agents ignifuges,
F) un ou plusieurs agents gonflants,
G) un ou plusieurs catalyseurs et
H) éventuellement d'autres adjuvants ou additifs.

12. Procédé selon la revendication 11, **caractérisé en ce que** le rapport en masse entre la somme des composants B) et C) et le composant D) est d'au moins 1.

13. Procédé selon la revendication 11 ou 12, **caractérisé en ce que** le rapport en masse entre la somme des composants B) et C) et le composant D) est inférieur à 80.

14. Procédé selon l'une quelconque des revendications 11 à 13, **caractérisé en ce que** le rapport en masse entre les polyestérols B) et les polyester-polyols supplémentaires C) est d'au moins 0,1.

15. Procédé selon l'une quelconque des revendications 11 à 14, **caractérisé en ce qu'**aucun polyester-polyol supplémentaire C) n'est mis en réaction.

16. Procédé selon l'une quelconque des revendications 12 à 14, **caractérisé en ce qu'**exclusivement du polyéthylène glycol est mis en réaction en tant que composant D).

17. Mousse dure de polyuréthane, pouvant être obtenue par le procédé selon l'une quelconque des revendications 12 à 16.

18. Utilisation des mousses dures de polyuréthane selon la revendication 17 pour la fabrication d'éléments en sandwich comprenant des couches de revêtement rigides ou flexibles.

19. Composant polyol contenant
B) 10 à 90 % en poids de polyestérols selon l'une quelconque des revendications 1 à 10,
C) 0 à 60 % en poids de polyester-polyols supplémentaires C), qui diffèrent de ceux du composant B) ,
D) 0 à 11 % en poids de polyéther-polyols,
E) 2 à 50 % en poids d'agents ignifuges,
F) 1 à 45 % en poids d'agents gonflants,
G) 0,001 à 10 % en poids de catalyseurs, et
H) 0,5 à 20 % en poids d'autres adjuvants et additifs,
la somme des composants B) à H) étant de 100 % en poids, et le rapport en masse entre la somme des composants B) et C) et le composant D) étant d'au moins 1.
